**Europäisches Patentamt**

(19) **European Patent Office**

**Office européen des brevets**

(11) Veröffentlichungsnummer: **0 111 121 B1**

# EUROPÄISCHE PATENTSCHRIFT

(45) Veröffentlichungstag der Patentschrift:
06.08.86

(21) Anmeldenummer: 83110594.5

(22) Anmeldetag: 24.10.83

(51) Int. Cl.⁴: **C 08 G 18/10, C 08 G 18/76, C 08 G 18/48, C 08 G 18/80, C 07 C 125/073**

(54) Flüssige Urethangruppen enthaltende Polyisocyanatmischungen and Diphenylmethan-diisocyanat-basis, Verfahren zu deren Herstellung und deren Verwendung zur Herstellung von Polyurethan-Weichschaumstoffen.

(30) Priorität: 10.11.82 DE 3241450

(43) Veröffentlichungstag der Anmeldung:
20.06.84 Patentblatt 84/25

(45) Bekanntmachung des Hinweises auf die Patenterteilung:
06.08.86 Patentblatt 86/32

(84) Benannte Vertragsstaaten:
AT BE CH DE FR GB IT LI NL SE

(56) Entgegenhaltungen:
EP - A - 0 010 850
EP - A - 0 022 617
GB - A - 1 025 242
US - A - 4 143 014

(73) Patentinhaber: BASF Aktiengesellschaft,
Carl-Bosch-Strasse 38, D-6700 Ludwigshafen (DE)

(72) Erfinder: Buethe, Ingolf, Dr., Am Wasserturm 1,
D-6737 Boehl-Iggelheim (DE)
Erfinder: Marx, Matthias, Dr., Seebacher Strasse 49,
D-6702 Bad Duerkheim (DE)
Erfinder: Schleier, Gisbert, Dr., Bismarckstrasse 74,
D-6700 Ludwigshafen (DE)
Erfinder: Peters, Reinhard, Dr., Am Stadtpark 30a,
D-8000 Muenchen 60 (DE)

## Beschreibung

Die Herstellung von bei Raumtemperatur flüssigen Diphenylmethan-diisocyanat-Zusammensetzungen ist bekannt.

Nach Angaben der DE-PS 1 618 380 (US 3 644 457) werden hierzu ein Mol 4,4'- und/oder 2,4'-Diphenylmethan-diisocyanat — im folgenden kurz MDI genannt — mit 0,1 bis 0,3 Mol Tri-1,2-oxypropylen-glykol und/oder Poly-1,2-oxypropylen-glykol mit einemn Molekulargewicht bis 700 zur Reaktion gebracht.

Gemäss GB-PS 1 369 334 wird die Modifizierung in zwei Reaktionsstufen durchgeführt und als Modifizierungsmittel Dipropylen-glykol oder Polyoxypropylen-glykol mit einem Molekulargewicht unter 2000 verwendet.

Die DE-OS 2 913 126 (US 4 229 347) beschreibt MDI-Zusammensetzungen, in denen 10 bis 35 Gew.-% der Isocyanatgruppen mit einem Gemisch aus mindestens 3 Alkylenglykolen umgesetzt werden und wobei eines dieser Glykole Di-, Tri- oder ein höheres Polypropylenglykol ist.

In der DE-OS 2 404 166 (GB 1 430 455) werden hingegen als Modifizierungsmittel Gemische aus einem Polyoxyethylen-glykol oder Polyoxyethylenglykolgemisch mit einem durchschnittlichen Molekulargewicht kleiner als 650 und mindestens einem Alkylenglykol mit mindestens 3 C-Atomen genannt.

Die DE-OS 2 346 996 (GB 1 377 679) betrifft MDI-Zusammensetzungen, bei denen 10 bis 35 Gew.-% der Isocyanatgruppen mit einem handelsüblichen Polyethylenglykol umgesetzt wurden.

Zur Herstellung von flüssigen Polyisocyanat-Zusammensetzungen wurde neben MDI und Glykolen und/oder Polyoxyalkylenglykolen zusätzlich auch die Mitverwendung von Mischungen aus Diphenylmethan-diisocyanaten und Polyphenyl-polymethylen-polyisocyanaten — im folgenden roh-MDI genannt — beschrieben.

Nach der EP-OS 10 850 besteht eine derartige Polyisocyanat-Zusammensetzung aus einem mit Polyoxyalkylen-polyolen mit einer Funktionalität von 2 bis 3 auf Basis von Polyoxypropylen-polyol und gegebenenfalls Polyoxyethylen-polyol mit Molekulargewichten von 750 bis 3000 modifiziertem MDI im Gemisch mit roh-MDI.

Eine flüssige roh-MDI-Zusammensetzung wird nach der DE-AS 2 737 338 (US 4 055 548) durch Vereinigen von roh-MDI mit einem Polyoxyethylen-glykol mit einem durchschnittlichen Molekulargewicht von 200 bis 600 erhalten.

Nach Angaben der DE-AS 2 624 526 (GB-PS 1 550 325) wird ein nach einem speziellen Verfahren hergestelltes roh-MDI mit 88 bis 95 Gew.-% MDI mit Polyoxypropylen-glykol des Molekulargewichtsbereichs 134 bis 700 umgesetzt.

Die DE-Osen 2 513 796 (GB 1 444 192) und 2 513 793 (GB 1 450 660) betreffen roh-MDI-Zusammensetzungen, bei denen das roh-MDI mit Alkylen- oder Polyoxyalkylen-glykolen in bestimmten Mengen modifiziert wurde.

Die genannten Alkylen- oder Polyoxyalkylenglykole bewirken zwar eine Verflüssigung der bei 42° bzw. 28°C schmelzenden 4,4'- bzw. 2,4'-MDI-Isomeren. Nachteilig ist jedoch, dass die Polyisocyanat-Zusammensetzungen bei Temperaturen um 10°C nach längeren Lagerzeiten kristalline Ausscheidungen zeigen.

Es war ferner bekannt Polyurethan-Weichschaumstoffe unter Verwendung von mit Urethangruppen modifizierten roh-MDI-Zusammensetzungen als Polyisocyanatkomponente herzustellen.

Nach Angaben der EP-OS 22 617 wird hierbei ein di- bis trifunktionelles Polyoxypropylen-polyoxyethylen-polyol mit einem Gehalt an polymerisierten Oxyethylengruppen von mindestens 50 Gew.-% mit überschüssigem roh-MDI zur Reaktion gebracht. Nachteilig an den beschriebenen Schaumstoffen ist insbesondere die geringe Zug- und Weiterreissfestigkeit.

Die Aufgabe der vorliegenden Erfindung bestand darin flüssige, auch bei tiefen Temperaturen, z.B. bis —10°C, lagerstabile Polyisocyanatmischungen auf Diphenylmethan-diisocyanatbasis zu entwickeln. Die Produkte sollten ferner insbesondere zur Herstellung von Polyurethan-Weichschaumstoffen geeignet sein und hierbei zu verbesserten mechanischen Eigenschaften führen.

Diese Aufgaben konnten überraschenderweise gelöst werden mit flüssigen, Urethangruppen enthaltenden Polyisocyanatmischungen auf Diphenylmethan-diisocyanatbasis mit einem Gehalt an Isocyanatgruppen von 12 bis 30 Gew.-%, vorzugsweise 20 bis 28 Gew.-%, die erhalten werden

A) durch Umsetzung
  a) einer Mischung aus Diphenylmethan-diisocyanaten und Polyphenyl-polymethylen-polyisocyanaten, vorzugsweise mit einem Gehalt an Diphenylmethan-diisocyanat-Isomeren von 40 bis 95 Gew.-%, mit
  b) mindestens einem Polyoxypropylen-polyoxyethylen-polyol mit einer Funktionalität von 2 bis 4, einer Hydroxylzahl von 10 bis 65 und einem Gehalt an polymerisierten Ethylenoxidgruppen von 5 bis 30 Gew.-%, bezogen auf das Gewicht an polymerisierten Ethylenoxid- und Propylenoxidgruppen,

oder vorzugsweise

B) durch Umsetzung von
  c) 4,4'-diphenylmethan-diisocyanat oder einer Mischung aus Diphenylmethan-diisocyanaten mit
  b) mindestens einem Polyoxypropylen-polyoxyethylen-polyol mit einer Funktionalität von 2 bis 4, einer Hydroxylzahl von 10 bis 65 und einem Gehalt an polymerisierten Ethylenoxidgruppen von 5 bis 30 Gew.-%, bezogen auf das Gewicht an polymerisierten Ethylenoxid- und Propylenoxidgruppen,

und anschliessender Verdünnung des Urethangruppen enthaltenden Reaktionsproduktes mit

  a) einer Mischung aus Diphenylmethan-diisocyanaten und Polyphenyl-polymethylen-polyisocyanaten.

Die erfindungsgemässen flüssigen, Urethangruppen enthaltenden Polyisocyanatmischungen sind bei Temperaturen um 0°C lagerstabil. Selbst bei einer Lagerung bei —10°C wurde nach mehreren Wochen noch keine Sedimentbildung beobachtet. Überraschenderweise zeigten Polyurethan-Weichschaumstoffe, die unter Verwendung der erfindungsgemässen Polyisocyanatmischungen hergestellt wurden, wesentlich verbesserte Gebrauchseigenschaften. Zu nennen sind insbesondere eine verbesserte Dehnbarkeit, Zugfestigkeit und Weiterreissfestigkeit.

Zur Herstellung der flüssigen, Urethangruppen enthaltenden Polyisocyanatmischungen kommen die folgenden Aufbaukomponenten (a) bis (c) in Betracht:

a) Geeignete Mischungen aus Diphenylmethan-diisocyanaten und Polyphenyl-polymethylen-polyisocyanaten, üblicherweise roh-MDI genannt, besitzen neben höheren Homologen Gehalte an 4,4'-, 2,4'- und gegebenenfalls 2,2'-Diphenylmethan-diisocyanat von 40 bis 95 Gew.-%. Werden die erfindungsgemässen Polyisocyanatmischungen nach der Verfahrensvariante A hergestellt, so finden vorzugsweise roh-MDI's mit einem Diphenylmethandiisocyanatgehalt von 60 bis 95 Gew.-% und insbesondere von 70 bis 90 Gew.-% Anwendung.

Hingegen werden zum Verdünnen der urethangruppenhaltigen Mischungen aus Diphenylmethan-diisocyanaten nach der Verfahrensvariante B vorzugsweise roh-MDI's mit einem Diphenylmethan-diisocyanat-Gehalt von 45 bis 80 Gew.-% und insbesondere von 50 bis 70 Gew.-% eingesetzt.

b) Die erfindungsgemäss als Modifizierungsmittel verwendbaren Polyoxypropylen-polyoxyethylenpolyole besitzen Funktionalitäten von 2 bis 4, vorzugsweise von 2,5 bis 3, Hydroxylzahlen von 10 bis 65, vorzugsweise von 20 bis 45 und Gehalte an polymerisierten Ethylenoxidgruppen von 5 bis 30 Gew.-%, vorzugsweise 8 bis 20 Gew.-%, bezogen auf das Gesamtgewicht an polymerisierten Ethylenoxid- und Propylenoxidgruppen. Hierbei können die polymerisierten Ethylenoxidgruppen als Blöcke oder in statistischer Verteilung angeordnet sein. Zweckmässigerweise verwendet werden solche Polyoxypropylen-polyoxyethylen-polyole, die bis zu 20 Gew.-%, vorzugsweise 3 bis 15 Gew.-% der polymerisierten Ethylenoxidgruppen, bezogen auf das Gewicht an polymerisierten Ethylenoxid- und Propylenoxidgruppen, endständig gebunden enthalten. Aufgrund ihres geringen Gehalts an Oxyethyleneinheiten zeichnen sich die Produkte durch eine verbesserte Mischbarkeit mit den genannten aromatischen Polyisocyanaten aus.

Die Polyoxypropylen-polyoxyethylen-polyole können einzeln oder als Mischungen Anwendung finden.

Als Startermoleküle zur Herstellung der Polyoxypropylen-polyoxyethylen-polyole in Gegenwart von basischen Katalysatoren kommen neben Wasser di- bis tetrafunktionelle, vorzugsweise di- bis trifunktionelle Polyole in Betracht. Im einzelnen seien beispielhaft genannt: Ethylenglykol, 1,2- und 1,3-Propylenglykol, Diethylenglykol, Dipropylenglykol, 1,4-Butylenglykol, 1,6-Hexamethylenglykol, Glycerin, Trimethylol-propan und Pentaerythrit.

Gebräuchliche basische Katalysatoren sind Alkalyalkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, wie Lithium-, Cäsium- und insbesondere Natrium- und Kaliumhydroxid.

c) Mischungen aus Diphenylmethan-diisocyanaten (MDI) enthalten zweckmässigerweise
50 bis 98 Gew.-%, vorzugsweise 60 bis 85 Gew.-% 4,4'-MDI,
50 bis 2 Gew.-%, vorzugsweise 40 bis 14 Gew.-% 2,4'-MDI und
0 bis 2 Gew.-%, vorzugsweise 0 bis 1 Gew.-% 2,2'-MDI. Anstelle der MDI-Isomerenmischung kann auch reines 4,4'-MDI verwendet werden. Da MDI-Isomerenmischungen jedoch eine bessere Fliessfähigkeit besitzen, werden bevorzugt diese eingesetzt.

Zur Herstellung der erfindungsgemässen flüssigen, Urethangruppen enthaltenden Polyisocyanatmischungen nach der Verfahrensvariante (A) wird das roh-MDI (a) und das Polyoxypropylen-polyoxyethylen-polyol (b) bei Temperaturen von 0 bis 100°C, vorzugsweise von 30 bis 80°C in solchen Mengen zur Reaktion gebracht, dass das NCO-: OH-Gruppenverhältnis 1:0,001 bis 1:0,19, vorzugsweise 1:0,01 bis 1:0,1 beträgt. Nach einer Reaktionszeit von 0,5 bis 5 Stunden, vorzugsweise von 1 bis 3 Stunden lässt man die lagerstabile Polyisocyanatmischung abkühlen.

Werden die erfindungsgemässen Polyisocyanatmischungen jedoch vorwiegend zur Herstellung von Polyurethan-Weichschaumstoffen verwendet, so werden die erfindungsgemässen Polyisocyanatmischungen insbesondere nach der Verfahrensvariante B hergestellt. Hierbei wird 4,4'-MDI oder vorzugsweise die MDI-Isomerenmischungen (c) und das Polyoxypropylen-polyoxyethylen-polyol (b) bei Temperaturen von 0 bis 100°C, vorzugsweise von 30 bis 80°C in einer solchen Menge zur Reaktion gebracht, dass das Verhältnis von NCO-: OH-Gruppen 1:0,001 bis 1:0,2, vorzugsweise 1:0,02 bis 1:0,15 beträgt. Nach einer Reaktionszeit von 0,5 bis 6 Stunden, vorzugsweise von 1 bis 3 Stunden, lässt man das urethangruppenhaltige MDI auf Temperaturen von 0 bis 80°C abkühlen und verdünnt es mit roh-MDI bis zu einem Isocyanatgruppengehalt von 12 bis 30 Gew.-%. Bei Verwendung von 40 bis 90 Gew.-Teilen des urethangruppenhaltigen MDI sind hierfür üblicherweise 60 bis 10 Gew.-Teile roh-MDI erforderlich.

Die erfindungsgemäss hergestellten flüssigen Urethangruppen enthaltenden Polyisocyanatmischungen sind bei Temperaturen bis —10°C lagerbeständig.

Wie bereits dargelegt, eignen sich die erfindungsgemässen Polyisocyanat-Mischungen insbesondere zur Herstellung von Polyurethan-Weichschaumstoffen.

Die erfindungsgemässen Polyisocyanatmischungen werden hierzu mit üblichen Polyhydroxylverbindungen in Gegenwart von Treibmitteln und Katalysatoren sowie gegebenenfalls Hilfsmitteln und/oder Zusatzstoffen in offenen oder geschlossenen Formen verschäumt.

Als Polyhydroxylverbindungen finden hierzu vorzugsweise übliche lineare und/oder verzweigte Polyesterole und insbesondere Polyetherole mit Molekulargewichten von 200 bis 8000, vorzugsweise 800 bis 5000, und insbesondere 1800 bis 3500 Anwendung. In Betracht kommen jedoch auch ander hydroxylgruppenhaltige Polymere mit den obengenannten Molekulargewichten, beispielsweise Polyesteramide, Polyacetale und/oder Polycarbonate, insbesondere solche, hergestellt aus Diphenylcarbonat und Hexandiol-1,6 durch Umesterung.

Die Polyesterole können beispielsweise aus Dicarbonsäure, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, und aromatische Dicarbonsäuren, wie Phthalsäure und Terephthalsäure. Beispiele für mehrwertige, insbesondere zwei- und dreiwertige Alkohole sind: Ethylenglykol, Diethylenglykol, 1,2- bzw. 1,3-Propylenglykol, Dipropylenglykol, Decandiol- 1,10, Glycerin, Trimethylolpropan und vorzugsweise Butandiol-1,4 und Hexandiol-1,6. Sofern zur Herstellung der Polyesterole mehrwertige, insbesondere dreiwertige Alkohole mitverwendet werden, wird deren Gehalt zweckmässigerweise so berechnet, dass die Funktionalität der erhaltenen Polyesterole maximal 6, vorzugsweise 2 bis 4 ist.

Die Polyesterole besitzen Molekulargewichte von 500 bis 2 800, vorzugsweise von 1 000 bis 2 000, und Hydroxylzahlen von 40 bis 280, vorzugsweise von 50 bis 120.

Vorzugsweise als Polyhydroxylverbindungen verwendet werden jedoch Polyetherole, die nach bekannten Verfahren aus einem oder mehreren Alkylenoxiden mit 2 bis 4 Kohlenstoffatomen im Alkylenrest und einem Startermolekül, das 2 bis 4, vorzugsweise 2 bis 3 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäure, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5 und 1,6-Hexamethylendiamin, Phenylendiamine, 2,4- und 2,6-Toluylendiamin und 4,4'-, 2,4'- und 2,2'-Diamino-diphenylmethan; Monoamine, wie Methylamin, Ethylamin, Isopropylamin, Butylamin, Benzylamin, Anilin, die Toluidine und Naphthylamine. Von den Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N'',N''-Pentakis-(2-hydroxypropyl)-ethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethyl-diethanolamin, N-Methyl- und N-Ethyl-dipropanolamin und Triethanolamin, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylglykol, Butylenglykol-1,4, Hexamethylenglykol-1,6, Glycerin, Trimethylol-propan und Pentaerythrit.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen, oder Mischungen aus mehrwertigen Alkoholen und Aminoalkoholen und/oder Polyaminen gewonnenen, vorwiegend linearen Kondensate.

Als Polyacetale kommen z.B. die aus Glykolen, wie Diethylenglykol, Triethylenglykol, 4,4'-Di-(2-hydroxy-ethoxy)-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie z.B. Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Die Polyhydroxylverbindungen können einzeln oder in Form von Mischungen verwendet werden. Bewährt haben sich beispielsweise auch Mischungen aus Polyester- und Polyetherolen, wobei das Verhältnis der Komponenten je nach Verwendungszweck des herzustellenden Polyurethanschaumstoffs in breiten Grenzen, beispielsweise im Gewichtsverhältnis von Polyesterol zu Polyetherol von 20:80 bis 80:20 variiert werden kann.

Gegebenenfalls kann es zweckmässig sein, neben den genannten Polyhydroxylverbindungen, zusätzlich Kettenverlängerungsmittel oder Vernetzungsmittel zur Herstellung der Polyurethanschaumstoffe mitzuverwenden. Als derartige Mittel kommen polyfunktionelle, insbesondere di- und trifunktionelle Verbindungen mit Molekulargewichten von 17 bis 600, vorzugsweise 60 bis 300, in Betracht. Verwendet werden beispielsweise Di- und Trialkanolamine, wie Diethanolamin und Triethanolamin, aliphatische und aromatische Diamine, wie z.B. Ethylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, 1,4-Butylenglykol, 1,6-Hexamethylenglykol, Glyzerin und Trimethylolpropan.

Sofern Kettenverlängerungs- oder Vernetzungsmittel eingesetzt werden, kommen diese in Mengen von 1 bis 60 Gew.-Teilen, vorzugsweise von 10 bis 30 Gew.-Teilen pro 100 Gew.-Teile Polyhydroxylverbindungen zur Anwendung.

Zu Treibmitteln, welche im erfindungsgemässen Verfahren verwendet werden können, gehört vorzugsweise Wasser, das mit Isocyanatgruppen unter Bildung von Kohlendioxid reagiert. Die Wassermengen, die zweckmässigerweise verwendet werden können, betragen 0,1 bis 8 Gewichtsteile, vorzugsweise 1,5 bis 5 Gewichtsteile, bezogen auf 100 Gewichtsteile Polyhydroxylverbindung.

Im Gemisch mit Wasser können auch physikalisch wirkende Treibmittel eingesetzt werden. Geeignet sind Flüssigkeiten, welche gegenüber den erfindungsgemässen Polyisocyanatmischungen inert sind und Siedepunkte unter 100°C, vorzugsweise unter 50°C, insbesondere zwischen —50°C und 30°C bei Atmosphärendruck aufweisen, so dass sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluormethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyhydroxylverbindung. Gegebenenfalls kann es zweckmässig sein, die erfindungsgemässe Polyisocyanatmischung mit dem physikalisch wirkenden Treibmittel zu mischen und dadurch die Viskosität zu verringern.

Zur Beschleunigung der Umsetzung zwischen den Polyhydroxylverbindungen, Wasser und gegebenenfalls Kettenverlängerungs- oder Vernetzungsmittel und den erfindungsgemässen Polyisocyanatmischungen auf Diphenylmethan-diisocyanat-basis werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylamin, Dimethylcyclohexylamin, N,N,N',N'-Tetramethyl-diamino-diethylester, Bis-(dimethylaminopropyl)-harnstoff, N-Methyl- bzw. N-Ethyl-morpholin, Dimethylpiperazin, Pyridin, 1,2-Dimethylimidazol, 1-Azobicyclo-(3,3,0)-octan, Dimethylaminoethanol, 2-(N,N-Dimethylaminoethoxy)ethanol, N,N',N''- -Tris-(dialkylaminoalkyl)-hexahydrotriazine, z.B. N,N',N''-Tris-(dimethylaminopropyl)-s-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmässigerweise 0,1 bis 10 Gew.-%, vorzugsweise 0,5 bis 5 Gew.-% Katalysator auf Basis tertiärer Amine und/oder 0,01 bis 0,5 Gew.-%, vorzugsweise 0,05 bis 0,25 Gew.-% Metallsalze, bezogen auf das Gewicht an Polyhydroxylverbindungen.

Der Reaktionsmischung können auch noch Hilfsmittel und/oder Zusatzstoffe einverleibt werden. Genannt seien beispielsweise Stabilisatoren, Hydrolysenschutzmittel, Porenregler, fungistatisch und bakteriostatisch wirkende Substanzen, Farbstoffe, Pigmente, Füllstoffe, oberflächenaktive Stoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxyethylierte Fettalkohole, Paraffinöle, Rizinusöl- bzw. Rizinolsäureester und Türkischrotöl, die in Mengen von 0,2 bis 8, vorzugsweise von 0,5 bis 5 Gewichtsteilen pro 100 Gewichtsteilen Polyhydroxylverbindung angewandt werden.

Als Flammschutzmittel sind beispielsweise Phosphor- und/oder Halogenatome enthaltende Verbindungen, wie z.B. Trikresylphosphat, Tris-2-chlorethylphosphat, Tris-chlorpropylphosphat und Tris--2,3-dibromopropylphosphat geeignet.

Ausser den bereits genannten halogensubstituierten Phosphaten können auch anorganische Flammschutzmittel, beispielsweise Antimontrioxid, Arsenoxid, Ammoniumphosphat und Calciumsulfat, oder Melamin zum Flammfestmachen der Polyurethanschaumstoffe verwendet werden.

Im allgemeinen hat es sich als vorteilhaft erwiesen, 5 bis 50 Gewichtsteile, vorzugsweise 5 bis 25 Gewichtsteile der genannten Flammschutzmittel pro 100 Gewichtsteile Polyhydroxylverbindung zu verwenden.

Zur Herstellung der Polyurethan-Weichschaumstoffe werden die erfindungsgemässen Polyisocyanatmischungen, Polyhydroxylverbindungen und gegebenenfalls Kettenverlängerungs- und Vernetzungsmittel in Gegenwart von Katalysatoren, Treibmitteln und gegebenenfalls Hilfsmitteln und/oder Zusatzstoffen bei Temperaturen von 0 bis 70°C, vorzugsweise 15 bis 50°C in solchen Mengenverhältnissen zur Reaktion gebracht, dass pro NCO-Gruppe 0,5 bis 2, vorzugsweise 0,8 bis 1,3 und insbesondere ungefähr ein reaktive(s) Wasserstoffatom(e) gebunden an die Polyhydroxylverbindung und gegebenenfalls Kettenverlängerungs- oder Vernetzungsmittel vorliegen und das Molverhältnis von Äquivalente Wasser zu Äquivalente NCO-Gruppen 0,5 bis 5 : 1, vorzugsweise 0,7 bis 0,95 : 1 und insbesondere 0,75 bis 0,85 : 1 beträgt.

Die Polyurethanweichschaumstoffe werden nach dem one shot-Verfahren hergestellt, wobei die Ausgangskomponenten, Hilfsmittel und Zusatzstoffe bei Verwendung einer Mischkammer mit mehreren Zulaufdüsen einzeln zugeführt und in der Mischkammer intensiv vermischt werden. Als besonders zweckmässig hat es sich jedoch erwiesen, so dass diese Verfahrensweise bevorzugt angewandt wird, nach dem Zweikomponenten-Verfahren zu arbeiten und die Polyhydroxylverbindung, Katalysatoren, Treibmittel und gegebenenfalls Kettenverlängerungs- oder Vernetzungsmittel, Hilfsmittel und/oder Zusatzstoffe zu der sogenannten A-Komponente zu vereinigen und als B-Komponente die erfindungsgemässe Polyisocyanatmischung gegebenenfalls im Gemisch mit physikalisch wirkenden Treibmitteln, Hilfsmittel und/oder Zusatzstoffen zu verwenden. Vorteilhaft ist hierbei, dass die A- und B-Komponente raumsparend transportiert und beschränkte Zeit gelagert werden können und vor Herstellung der Polyurethanweichschaumstoffe nur noch intensiv gemischt werden müssen.

Die aus den flüssigen, Urethangruppen enthaltenden Polyisocyanatmischungen hergestellten Polyurethan-Weichschaumstoffe besitzen Dichten von 10 bis 150 kg/m$^3$, vorzugsweise 20 bis 70 kg/m$^3$ und zeichnen sich durch eine erhöhte Reissdehnung, verbesserte Zug- und Weiterreissfestigkeit aus.

Die in den Beispielen genannten Teile beziehen sich auf das Gewicht.

*Beispiel 1*

Herstellung der Polyisocyanatmischung auf Diphenylmethan-diisocyanatbasis

Zu einer Mischung aus

38,2 Teilen 4,4'-MDI und
19,7 Teilen 2,4'-MDI

fügte man unter Rühren bei 70°C

19,1 Teile eines mit Glycerin gestarteten Polyoxypropylen-polyoxyethylentriols mit einer OH-Zahl von 42 und einem Gesamtgehalt an polymerisierten Oxyethylengruppen von 11 Gew.-%, von denen 6 Gew.-% endständig anpolymerisiert sind.

Nach einer Nachreaktionszeit von 2 Stunden bei 70°C liess man das urethangruppenhaltige MDI auf Raumtemperatur abkühlen und verdünnte die Reaktionsmischung mit

30 Teilen Roh-MDI mit einem NCO-Gehalt von 31 Gew.-%.

Die erhaltene Polyisocyanatmischung besass einen NCO-Gehalt von 25,1 Gew.-% und zeigte nach 14tägiger Lagerung bei —10°C keine Sedimentausscheidung.

*Vergleichsbeispiel A*

Man verfuhr analog den Angaben von Beispiel 1, verwendete jedoch als Polyoxypropylen-polyoxyethylen-polyol ein Glycerin gestartetes Polyoxypropylen-polyoxyethylen-triol, das in statistischer Verteilung 25 Gew.-% polymerisierte Oxypropylengruppen und 75 Gew.-% polymerisierte Oxyethylengruppe gebunden enthielt.

Die erhaltene Polyisocyanatmischung zeigte nach 3tätiger Lagerung bei —10°C eine deutliche Sedimentbildung.

*Beispiel 2*

Herstellung von Polyurethan-Weichschaumstoffen

A-Komponente:

Mischung aus

100    Teilen eines Glycerin gestarteten Polyoxypropylenpolyoxyethylen-triols mit 13,5 Gew.-% endständig polymerisierten Oxyethylengruppen und einer OH-Zahl von 38,
   2,8 Teilen Wasser,
   0,6 Teilen Triethylendiamin (33 gew.%ig in Dipropylenglykol),
   0,3 Teilen Bis-(N,N-dimethylaminoethyl)-ether,
   0,8 Teilen Triethanolamin,
   0,2 Teilen Silikonstabilisator B 4690 (der Firma Goldschmidt, Essen)
      und
    8 Teilen Trichlorfluormethan

B-Komponente: Polyisocyanatmischung nach Beispiel 1

100  Gew.-Teile der A-Komponente und 51,3 Gew.-Teile der B-Komponente wurden bei 25°C 10 Sekunden lang intensiv gemischt.

736 g der schäumfähigen Reaktionsmischung wurden in eine auf 40°C erwärmte, quaderförmige Metallform mit einem Formvolumen von 16 Liter eingebracht, die Metallform verschlossen und die Reaktionsmischung aufschäumen gelassen.

An dem erhaltenen Polyurethan-Weichschaumstoff wurden die in der folgenden Tabelle zusammengefassten mechanischen Eigenschaften gemessen.

*Vergleichsbeispiel B*

Herstellung eines Polyurethan-Weichschaumstoffes

A-Komponente gemäss Beispiel 2
B-Komponente gemäss Vergleichsbeispiel A

Die Herstellung des Polyurethan-Weichschaumstoffes wurde analog den Angaben des Beispiels 2 durchgeführt.

Die an dem erhaltenen Schaumstoff gemessenen mechanischen Eigenschaften sind in der folgenden Tabelle zusammengefasst.

| Polyurethan-Weichschaumstoff nach | | Beispiel 2 | Vergleichsbeispiel B |
|---|---|---|---|
| Raumgewicht | [kg/m³] | 46 | 46 |
| Zugfestigkeit nach DIN 53 571 | [kPa] | 80 | 40 |
| Reissdehnung nach DIN 53 571 | [%] | 102 | 75 |
| Weiterreissfestigkeit nach DIN 53 575 | [N/mm] | 0,31 | 0,21 |
| Eindruckhärte bei 40% | | | |
| Stauchung nach DIN 53 576 | [N] | 179 | 169 |
| Druckverformungsrest nach DIN 53 572 | [%] | 5,3 | 6,5 |
| Aussehen: | | feine gleichmässige Zellstruktur | grobe Zellen |

Die Messergebnisse zeigen, dass der unter Verwendung der erfindungsgemässen Polyisocyanatmischung hergestellte Polyurethan-Weichschaumstoff verbesserte Gebrauchseigenschaften, insbesondere eine erheblich verbesserte Zugfestigkeit, Weiterreissfestigkeit und Reissdehnung besitzt.

*Beispiel 3*

Herstellung der Polyisocyanatmischung auf Diphenylmethan-diisocyanatbasis

Zu einer Mischung aus

45   Teilen 4,4'-MDI,
45   Teilen 2,4'-MDI und
10   Teilen roh-MDI mit einem Gehalt an MDI-Isomeren von 44 Gew.-%

fügte man unter Rühren bei 50°C ein Gemisch aus

8,9 Teilen eines mit 1,2-Propandiol gestarteten Polyoxypropylen-polyoxyethylen-diols mit einer OH-Zahl von 28 und einem Gesamtgehalt an polymerisierten, endständig gebundenen Oxyethylengruppen von 18 Gew.-% und

8,9 Teilen eines mit Glycerin gestarteten Polyoxypropylen-polyoxyethylen-triols mit einer OH-Zahl von 28 und einem Gesamtgehalt an Polymerisierten, endständig gebundenen Oxyethylengruppen von 14 Gew.-%.

Nach einer Nachreaktionszeit von 2 Stunden bei 70°C liess man die urethangruppenhaltige Polyisocyanatmischung auf Raumtemperatur abkühlen. Das Produkt besass einen NCO-Gehalt von 27,8 Gew.-% und zeigte nach 14tätiger Lagerung bei —10°C keine Sedimentausscheidung.

*Beispiel 4*

Man verfuhr analog den Angaben des Beispiels 3, verwendete jedoch als Aufbaukomponenten eine Mischung aus

35 Teilen 4,4'-MDI,
15 Teilen 2,4'-MDI und
50 Teilen Roh-MDI mit einem Gehalt an MDI-Isomeren von Gew.-% und
139 Teile eines mit Glycerin gestarteten Polyoxypropylen-polyoxyethylen-triols mit einer OH-Zahl von 35 und einem Gesamtgehalt an polymerisierten, endständig gebundene Oxyethylengruppen von 13,8 Gew.-%.

Das Produkt besass einen NCO-Gehalt von 12,1 Gew.-% und zeigte nach 14tätiger Lagerung bei —10°C keine Sedimentausscheidung.

*Beispiel 5*

Zu einer Mischung aus

75 Teilen 4,4'-MDI und
25 Teilen 2,4'-MDI

fügte man analog den Angaben von Beispiel 1

41 Teile eines mit Glycerin gestarteten Polyoxypropylen-polyoxyethylen-triols mit einer OH-Zahl von 42 und einem Gehalt an polymerisierten Oxypropylengruppen von 86 Gew.-% und Oxyethylengruppen von 14 Gew.-%, die in statistischer Verteilung vorliegen.

Das erhaltene, urethangruppenhaltige MDI wurde bei Raumtemperatur mit 60 Teilen Roh-MDI mit einem NCO-Gehalt von 31 Gew.-% gemischt. Die erhaltene Polyisocyanatmischung besass einen NCO-Gehalt von 24,6 Gew.-% und zeigte nach 14tätiger Lagerung bei —10°C keine Sedimentbildung.

*Beispiel 6*

Herstellung eines Polyurethan-Weichschaumstoffes

A-Komponente:

Mischung aus

91   Teilen eines Glycerin gestarteten Polxoxypropylen-polyoxyethylen-triols mit einer OH-Zahl von 28 und einem Gesamtgehalt an polymerisierten, endständig gebundenen Oxyethylengruppen von 14 Gew.-%,
2,6   Teilen Wasser,
0,19 Teilen Bis-(dimethylamino)ethylether,
0,57 Teilen Triethylendiamin (33 gew.%ig in Dipropylenglykol),
1,00 Teilen Butandiol-1,4,
0,3   Teilen Silikonstabilisator B 4690 (der Fa. Goldschmidt, Essen) und
4,34 Teilen Trichlorfluormethan

B-Komponente: Polyisocyanatmischung nach Beispiel 5

100 Teile der A-Komponente und 69 Teile der B-Komponente wurden bei 25°C 10 Sekunden lang intensiv gemischt.

800 g dieser schäumfähigen Reaktionsmischung wurde in eine auf 50°C erwärmte, quaderförmige Metallform mit einem Formvolumen von 16 Litern eingebracht, die Metallform verschlossen und die Reaktionsmischung aufschäumen gelassen.

Man erhielt elastischen Schaumstoff, an dem folgende mechanische Eigenschaften gemessen wurde:

| | | |
|---|---|---|
| Raumgewicht | [kg/m³] | 48 |
| Zugfestigkeit nach DIN 53 571 | [k.Pa] | 150 |
| Reissdehnung nach DIN 53 571 | [%] | 114 |
| Weiterreissfestigkeit nach DIN 53 575 | [N/mm] | 0,5 |
| Stauchhärte bei 40% Stauchung nach DIN 53 577 | [k.Pa] | 5,4 |
| Druckverformungsrest nach DIN 53 572 | [%] | 7 |

**Patentansprüche**

1. Flüssige, Urethangruppen enthaltende Polyisocyanatmischungen auf Diphenylmethan-diisocyanat-basis mit einem Gehalt an Isocyanatgruppen von 12 bis 30 Gew.-%, erhalten

A)   durch Umsetzung

    a)   einer Mischung aus Diphenylmethan-diisocyanaten und Polyphenyl-polymethylen-polyisocyanaten mit

    b)   mindestens einem Polyoxypropylen-polyoxyethylen-polyol mit einer Funktionalität von 2 bis 4, einer Hydroxylzahl von 10 bis 65 und einem Gehalt an polymerisierten Ethylenoxidgruppen von 5 bis 30 Gew.-%, bezogen auf das Gewicht an polymerisierten Ethylenoxid- und Propylenoxidgruppen,
    oder

B)   durch Umsetzung von

    c)   4,4'-Diphenylmethan-diisocynat oder einer Mischung aus Diphenylmethan-diisocyanaten mit

    b)   mindestens einem Polyoxypropylen-polyoxyethylen-polyol gemäss /A, b)
    und anschliessendem Verdünnen des erhaltenen Urethangruppen enthaltenden Reaktionsproduktes mit

    a)   einer Mischung aus Diphenylmethan-diisocyanaten und Polyphenyl-polymethylen-polyisocyanaten.

2. Flüssige, Urethangruppen enthaltende Polyisocyanatmischungen nach Anspruch 1, dadurch gekennzeichnet, dass die Mischung (a) aus Diphenylmethan-diisocyanaten und Polyphenyl-polymethylen-polyisocyanaten einen Gehalt an Diphenylmethan-diisocyanaten von 40 bis 95 Gew.-% besitzt.

3. Flüssige, Urethangruppen enthaltende Polyisocyanatmischungen nach Anspruch 1, dadurch gekennzeichnet, dass das Polyoxypropylen-polyoxyethylen-polyol (b) eine Funktionalität von 2,5 bis 3 besitzt.

4. Flüssige, Urethangruppen enthaltende Polyisocyanatmischungen nach Anspruch 1, dadurch gekennzeichnet, dass das Polyoxypropylen-polyoxyethylen-polyol (b) bis zu 20 Gew.-% polymerisierte Ethylenoxidgruppen, bezogen auf das Gewicht an polymerisierten Ethylenoxid- und Propylenoxidgruppen, endständig gebunden enthält.

5. Flüssige, Urethangruppen enthaltende Polyisocyanatmischungen nach Anspruch 1, dadurch gekennzeichnet, dass die Mischung (c) aus Diphenylmethan-diisocyanaten enthält

50 bis 96 Gew.-% 4,4'-Diphenylmethan-diisocyanat

50 bis 2 Gew.-% 2,4'-Diphenylmethan-diisocyanat und

0 bis 2 Gew.-% 2,2'-Diphenylmethan-diisocyanat.

6. Verfahren zur Herstellung von flüssigen, Urethangruppen enthaltenden Polyisocyanatmischungen auf Diphenylmethan-diisocyanat-basis mit einem Gehalt an Isocyanatgruppen von 12 bis 30 Gew.-%, dadurch gekennzeichnet, dass man

a)   eine Mischung aus Diphenylmethan-diisocyanaten und Polyphenyl-polymethylen-polyisocyanaten mit

b)   mindestens einem Polyoxypropylen-polyoxyethylen-polyol mit einer Funktionalität von 2 bis 4, einer Hydroxylzahl von 10 bis 65 und einem Gehalt an polymerisierten Ethylenoxidgruppen von 5 bis 30 Gew.-%, bezogen auf das Gewicht an polymerisierten Ethylenoxid- und Propylenoxidgruppen, im NCO-:OH-Gruppenverhältnis von 1:0,001 bis 1:0,19 bei Temperaturen von 0 bis 100°C umsetzt.

7. Verfahren nach Anspruch 6, dadurch gekennzeichnet, dass die Mischung (a) aus Diphenylmethan-diisocyanaten und Polyphenyl-polymethylen-polyisocyanaten einen Gehalt an Diphenylmethan-diisocyanaten von 40 bis 95 Gew.-% besitzt.

8. Verfahren zur Herstellung von flüssigen, Urethangruppen enthaltenden Polyisocyanatmischungen auf Diphenylmethan-diisocyanat-basis mit einem Gehalt an Isocyanatgruppen von 12 bis 30 Gew.-%, dadurch gekennzeichnet, dass man

c)   4,4'-Diphenylmethan-diisocyanat oder eine Mischung aus Diphenylmethan-diisocyanaten mit

b)   mindestens einem Polyoxypropylen-polyoxyethylen-polyol mit einer Funktionalität von 2 bis 4, einer Hydroxylzahl von 10 bis 65 und einem Gehalt an polymerisierten Ethylenoxidgruppen von 5 bis 30 Gew.-%, bezogen auf das Gewicht an polymerisierten Ethylenoxid- und Propylenoxidgruppen, im NCO-:OH-Gruppenverhältnis von 1:0,001 bis 1:0,2 bei Temperaturen von 0 bis 100°C zur Reaktion bringt und die erhaltene Reaktionsmischung bei Temperaturen von 0 bis 80°C mit

a)   einer Mischung aus Diphenylmethan-diisocyanaten und Polyphenyl-polymethylen-polyisocyanaten verdünnt.

Verfahren nach Anspruch 8, dadurch gekennzeichnet, dass man 90 bis 40 Gew.-Teile der Reaktionsmischung aus 4,4'-Diphenylmethan-diisocyanat oder den Diphenylmethan-diisocynaten (c) und Polyoxypropylen-polyoxyethylen-polyolen (b) mit 10 bis 60 Gew.-Teilen einer Mischung (a) aus Diphenylmethan-diisocyanaten und Polyphenyl-polymethylen-polyisocyanaten verdünnt.

10. Verwendung der flüssigen, Urethangruppen enthaltenden Polyisocyanatmischungen auf Diphenylmethan-diisocyanat-basis nach Anspruch 1 zur Herstellung von Polyurethan-Weichschaumstoffen.

## Claims

1. A liquid, urethane group-containing, diphenylmethane diisocyanate-based polyisocyanate mixture containing 12 to 30% by weight of isocyanate groups and obtained

A) by reacting
    a) a mixture of diphenylmethane diisocyanates and polyphenyl polymethylene polyisocyanates with
    b) at least one polyoxypropylene polyoxyethylene polyol having a functionality of 2 to 4 and a hydroxyl number of 10 to 65, and containing 5 to 30% by weight, based on the weight of ethylene oxide and propylene oxide units, of ethylene oxide units, or

B) by reacting
    c) 4,4'-diphenylmethane diisocyanate or a mixture of diphenylmethane diisocyanates with
    b) at least one polyoxypropylene polyoxyethylene polyol (A)(b)
    and subsequently diluting the resulting urethane group-containing reaction product with
    a) a mixture of diphenylmethane diisocyanates and polyphenyl polymethylene polyisocyanates.

2. A liquid, urethane group-containing polyisocyanate mixture as claimed in claim 1, wherein mixture (a) of diphenylmethane diisocyanates and polyphenyl polymethylene polyisocyanates contains 40 to 95% weight of diphenylmethane diisocyanates.

3. A liquid, urethane group-containing polyisocyanate mixture as claimed in claim 1, wherein polyoxypropylene polyoxyethylene polyol (b) has a functionality of 2.5 to 3.

4. A liquid, urethane group-containing polyisocyanate mixture as claimed in claim 1, wherein polyoxypropylene polyoxyethylene polyol (b) contains up to 20% by weight, based on the weight of ethylene oxide and propylene oxide units, of ethylene oxide units in a terminally bonded position.

5. A liquid, urethane group-containing polyisocyanate mixture as claimed in claim 1, wherein mixture (c) of diphenylmethane diisocyanates contains

50 to 96% by weight of 4,4'-diphenylmethane diisocyanate,
50 to 2% by weight of 2,4'-diphenylmethane diisocyanate, and
0 to 2% by weight of 2,2'-diphenylmethane diisocyanate.

6. A process for the preparation of a liquid, urethane group-containing, diphenylmethane diisocyanate-based polyisocyanate mixture containing 12 to 30% by weight of isocyanate groups, wherein

a) a mixture of diphenylmethane diisocyanates and polyphenyl polymethylene polyisocyanates is reacted, at a temperature of from 0 to 100°C, with
b) at least one polyoxypropylene polyoxyethylene polyol having a functionality of 2 to 4 and a hydroxyl number of 10 to 65, and containing 5 to 30% by weight, based on the weight of ethylene oxide and propylene oxide units, of ethylene oxide units, the ratio of NCO to OH groups being from 1:0.001 to 1:0.19.

7. A process as claimed in claim 6, wherein mixture (a) of diphenylmethane diisocyanates and polyphenyl polymethylene polyisocyanates contains 40 to 95% by weight of diphenylmethane diisocyanates.

8. A process for the preparation of a liquid, urethane group-containing, diphenylmethane diisocyanate-based polyisocyanate mixture containing 12 to 30% by weight of isocyanate groups, wherein

c) 4,4'-diphenylmethane diisocyanate or a mixture of diphenylmethane diisocyanates is reacted, at a temperature of from 0 to 100°C, with
b) at least one polyoxypropylene polyoxyethylene polyol having a functionality of 2 to 4 and a hydroxyl number of 10 to 65, and containing 5 to 30% by weight, based on the weight of ethylene oxide and propylene oxide units, of ethylene oxide units, the ratio of NCO to OH groups being from 1:0.001 to 1:0.2, and the resulting reaction mixture is diluted, at a temperature of from 0 to 80°C, with
a) a mixture of diphenylmethane diisocyanates and polyphenyl polymethylene polyisocyanates.

9. A process as claimed in claim 8, wherein 90 to 40 parts by weight of the reaction mixture of 4,4'-diphenylmethane diisocyanate or diphenylmethane diisocyanates (c) with polyoxypropylene polyoxyethylene polyols (b) are diluted with 10 to 60 parts by weight of a mixture (a) of diphenylmethane diisocyanates and polyphenyl polymethylene polyisocyanates.

10. The use of a liquid, urethane group-containing diphenylmethane diisocyanate-based polyisocyanate mixture as claimed in claim 1 for the production of flexible polyurethane foams.

## Revendications

1. Mélanges liquides de polyisocyanates à groupes uréthane, à base de diisocyanates de diphénylméthane, d'une teneur en groupes isocyanate de 12 à 30% en poids, préparés soit

A) par la réaction de
    a) un mélange de diisocyanates de diphénylméthane et de polyisocyanates de polyphényl-polyméthylène et

b) au moins un polyoxypropylène-polyoxyéthylène-polyol d'une fonctionnalité de 2 à 4 et d'un indice d'hydroxyle de 10 à 65 et avec une teneur en groupes oxyde d'éthylène polymérisés entre 5 et 30% en poids par rapport au poids des groupes oxyde d'éthylène et oxyde de propylène polymérisés, soit

B) par la réaction

c) du diisocyanate de 4,4'-diphényl-méthane ou d'un mélange de diisocyanates de diphényl-méthane et

d) d'au moins un polyoxypropylène-polyoxyéthylène-polyol selon Ab),
suivi de la diluition du produit réactionnel à groupes uréthane obtenu par

a) un mélange de diisocyanates de diphényl-méthane et de polyisocyanates de polyphényl-polyméthylène.

2. Mélanges liquides de polyisocyanates à groupes uréthane suivant la revendication 1, caractérisés en ce que le mélange de diisocyanates de diphényl-méthane et de polyisocyanates de polyphényl-polyméthylène (a) possède une teneur en diisocyanates de diphényl-méthane comprise entre 40 et 95% en poids.

3. Mélanges liquides de polyisocyanates à groupes uréthane suivant la revendication 1, caractérisés en ce que le polyoxypropylène-polyoxyéthylène-polyol (b) possède une fonctionnalité de 2,5 à 3.

4. Mélanges liquides de polyisocyanates à groupes uréthane suivant la revendication 1, caractérisés en ce que le polyoxypropylène-polyoxyéthylène-polyol (b) contient jusqu'à 20% en poids par rapport au poids des groupes oxyde d'éthylène et oxyde de propylène polymérisés de groupes oxyde d'éthylène polymérisés terminaux.

5. Mélanges liquides de polyisocyanates à groupes uréthane suivant la revendication 1, caractérisés en ce que le mélange de diisocyanates de diphényl-méthane (C) est composé de 50 à 96% en poids de diisocyanate de 4,4'-diphényl-méthane, de 50 à 2% en poids de diisocyanate de 2,4'-diphényl-méthane et de 0 à 2% en poids de diisocyanate de 2,2'-diphényl-méthane.

6. Procédé de préparation de mélanges liquides de polyisocyanates à groupes uréthane, à base de diisocyanates de diphényl-méthane, d'un teneur en groupes isocyanate de 12 à 30% en poids, caractérisé en ce que l'on fait réagir

a) un mélange de diisocyanates de diphényl-méthane et de polyisocyanates de polyphényl-polyméthylène et

b) au moins un polyoxypropylène-polyoxyéthylène-polyol d'une fonctionnalité de 2 à 4 et d'un indice d'hydroxyle de 10 à 65 et avec une teneur en groupes oxyde d'éthylène polymérisés entre 5 et 30% en poids par rapport au poids des groupes oxyde d'éthylène et oxyde de propylène polymérisés sous un rapport des groupes NCO- et -OH compris entre 1:0,001 et 1:0,19 à des températures comprises entre 0 et 100°C.

7. Procédé suivant la revendication 6, caractérisé en ce que le mélange de diisocyanates de diphényl-méthane et de polyisocyanates de polyphényl-polyméthylène (a) possède une teneur en diisocyanates de diphényl-méthane comprise entre 40 et 95% en poids.

8. Procédé de préparation de mélanges liquides de polyisocyanates à groupes uréthane, à base de diisocyanate de diphényl-méthane, d'une teneur en groupes isocyanate de 12 à 30% en poids, caractérisé en ce que l'on fait réagir

c) du diisocyanate de 4,4'-diphényl-méthane ou un mélange de diisocyanates de diphényl-méthane et

b) au moins un polyoxypropylène-polyoxyéthylène-polyol d'une fonctionnalité de 2 à 4 et d'un indice d'hydroxyle de 10 à 65 et avec une teneur en groupes oxyde d'éthylène polymérisés entre 5 et 30% en poids par rapport au poids des groupes oxyde d'éthylène et oxyde de propylène polymérisés sous un rapport des groupes NCO- et -OH compris entre 1:0,001 et 1:0,2 à des températures comprises entre 0 et 100°C, puis on dilue le mélange réactionnel obtenu entre 0 et 80°C avec

a) un mélange de diisocyanates de diphényl-méthane et de polyisocyanates de polyphényl-polyméthylène.

9. Procédé suivant la revendication 8, caractérisé en ce que l'on dilue entre 90 et 40 parties en poids du mélange réactionnel du diisocyanate de 4,4'-diphényl-méthane ou des diisocyanates de diphényl-méthane (c) et des polyoxypropylène-polyoxyéthylène-polyols (b) avec 10 à 60 parties en poids d'un mélange de diisocyanates de diphényl-méthane et de polyisocyanates de polyphényl-polyméthylène (a).

10. Utilisation de mélanges liquides de polyisocyanates à groupes uréthane, à base de diisocyanate de diphényl-méthane, suivant la revendication 1 pour la préparation de mousses flexibles de polyuréthane.